# EUROPÄISCHE PATENTSCHRIFT

(11) **EP 4 562 308 B1**
(45) Veröffentlichungstag und Bekanntmachung des Hinweises auf die Patenterteilung: **06.05.2026**
(21) Anmeldenummer: 23736308.0
(22) Anmeldetag: 29.06.2023
(51) Int. Cl.: F04D 23/00, F04D 25/06, H02K 1/2795, H02K 7/14

(54) **MAGNETROTOREINRICHTUNG FÜR EINEN SEITENKANALVERDICHTER FÜR EIN BRENNSTOFFZELLENSYSTEM, SEITENKANALVERDICHTER UND VERFAHREN ZUM HERSTELLEN EINER MAGNETROTOREINRICHTUNG FÜR EINEN SEITENKANALVERDICHTER FÜR EIN BRENNSTOFFZELLENSYSTEM**
MAGNETIC ROTOR DEVICE FOR A SIDE CHANNEL COMPRESSOR FOR A FUEL CELL SYSTEM, SIDE CHANNEL COMPRESSOR, AND METHOD FOR PRODUCING A MAGNETIC ROTOR DEVICE FOR A SIDE CHANNEL COMPRESSOR FOR A FUEL CELL SYSTEM
DISPOSITIF À ROTOR MAGNÉTIQUE POUR UN COMPRESSEUR À CANAL LATÉRAL POUR UN SYSTÈME DE PILE À COMBUSTIBLE, COMPRESSEUR À CANAL LATÉRAL, ET PROCÉDÉ DE PRODUCTION D'UN DISPOSITIF À ROTOR MAGNÉTIQUE POUR UN COMPRESSEUR À CANAL LATÉRAL POUR UN SYSTÈME DE PILE À COMBUSTIBLE

(30) Priorität: 27.07.2022 DE 102022207721
(43) Veröffentlichungstag der Anmeldung: 04.06.2025
(73) Patentinhaber: Robert Bosch GmbH, 70442 Stuttgart (DE)
(72) Erfinder: LAEMMLE, Frank, 71364 Winnenden (DE); JENNEWEIN, Frank, 66894 Martinshoehe (DE); SCHEPP, Rene, 71336 Waiblingen (DE)
(86) Internationale Anmeldenummer: PCT/EP2023/067777
(87) Internationale Veröffentlichungsnummer: WO 2024/022721

(56) Entgegenhaltungen:
- EP-A1- 3 425 204
- WO-A1-2021/172793
- DE-A1- 4 421 855
- JP-A- S60 150 498
- US-A1- 2023 077 214

## Beschreibung

Die vorliegende Erfindung betrifft eine Magnetrotoreinrichtung für einen Seitenkanalverdichter für ein Brennstoffzellensystem, Seitenkanalverdichter und Verfahren zum Herstellen einer Magnetrotoreinrichtung für einen Seitenkanalverdichter für ein Brennstoffzellensystem.

### Stand der Technik

Im Fahrzeugbereich spielen neben flüssigen Kraftstoffen in Zukunft auch gasförmige Kraftstoffe eine zunehmende Rolle. Insbesondere bei Fahrzeugen mit Brennstoffzellenantrieb müssen Wasserstoffgasströme gesteuert werden. Die Gasströme werden hierbei nicht mehr diskontinuierlich, wie bei der Einspritzung von flüssigem Kraftstoff gesteuert, sondern es wird das gasförmige Medium aus mindestens einem Hochdrucktank entnommen und über eine Zuströmleitung eines Mitteldruckleitungssystem an eine Ejektoreinheit geleitet. Diese Ejektoreinheit führt das gasförmige Medium über eine Verbindungsleitung eines Niederdruckleitungssystems zu einer Brennstoffzelle. Nachdem das gasförmige Medium durch die Brennstoffzelle geströmt ist, wird es über eine Rückführleitung zurück zur Ejektoreinheit geführt. Dabei kann ein Seitenkanalverdichter zwischengeschaltet werden, der die Gasrückführung strömungstechnisch und effizienztechnisch unterstützt. Zudem werden Seitenkanalverdichter zur Unterstützung des Strömungsaufbaus im Brennstoffzellenantrieb eingesetzt, insbesondere bei einem (Kalt)-Start des Fahrzeugs nach einer gewissen Standzeit. Das Antreiben dieser Seitenkanalverdichter erfolgt üblicherweise über Elektromotoren, die beim Betrieb in Fahrzeugen über die Fahrzeugbatterie mit Spannung versorgt werden.

Aus der DE 10 2018 222 102 A1 ist ein Seitenkanalverdichter für ein Brennstoffzellensystem bekannt, bei dem ein gasförmiges Medium, insbesondere Wasserstoff, gefördert und/oder verdichtet wird. Der Seitenkanalverdichter weist dabei ein Gehäuse und einen Antrieb auf, wobei das Gehäuse ein Gehäuse-Oberteil und ein Gehäuse-Unterteil aufweist, mit einem in dem Gehäuse umlaufend um eine Drehachse verlaufenden Verdichterraum, der mindestens einen umlaufenden Seitenkanal aufweist, mit einem in dem Gehäuse befindlichen Verdichterrad, das drehbar um die Drehachse angeordnet ist und durch den Antrieb angetrieben wird. Dabei weist das Verdichterrad an seinem Umfang im Bereich des Verdichterraums angeordnete Schaufelblätter auf und ist mit jeweils einer am Gehäuse ausgebildeten Gas-Einlassöffnung und einer Gas-Auslassöffnung, die über den Verdichterraum, insbesondere den mindestens einen Seitenkanal, fluidisch miteinander verbunden sind, wobei der Seitenkanalverdichter mindestens ein Lager aufweist. Zudem ist in der DE 10 2018 222 102 A1 gezeigt, dass sich eine Rotor-Baugruppe, der als ein Permanentmagnet ausgeführt sein kann, an einem Mitnahme-Flansch befindet, der eine Nabe entspricht.

Aus der JP S60 150 498 A ist eine Magnetrotoreinrichtung bekannt, wobei die Magnetrotoreinrichtung drehbar um eine Drehachse gelagert und mittels eines Antriebs antreibbar ist.

Die EP 3 425 204 A1 offenbart einen magnetisch lagerbaren Rotor, für eine Rotationsmaschine mit magnetisch gelagertem Rotor, wobei der Rotor einen magnetisch wirksamen Kern aufweist, sowie eine Ummantelung aus einem thermoplastisch verarbeitbaren Fluorpolymer.

Der aus der DE 10 2018 222 102 A1 bekannte Seitenkanalverdichter kann gewisse Nachteile aufweisen. Die Rotor-Baugruppe und/oder der Permanentmagnet befindet sich am Mitnahme-Flansch und sind nicht von einem Rotor-Raum gekapselt, insbesondere sind die Rotor-Baugruppe und/oder der Permanentmagnet nicht fluidisch vom Rotor-Raum gekapselt. Bei der Verwendung des Seitenkanalverdichters kann Wasserstoff in den Rotor-Raum eindringen und die metallischen Komponenten und/oder die Rotor-Baugruppe und/oder den Permanentmagneten schädigen, insbesondere mittels Wasserstoffversprödung. Dabei kann es zu einem Ausfall der Rotor-Baugruppe und/oder des Permanentmagneten kommen, so dass das Verdichterrad und/oder eine Magnetrotoreinrichtung nicht mehr mittels des Antriebs, insbesondere mittels eines Stators und Rotor-Baugruppe antreibbar ist, so dass sich die Ausfallwahrscheinlichkeit des Antriebs und somit des gesamten Seitenkanalverdichters erhöht.

Ein weiterer Nachteil des in der DE 10 2018 222 102 A1 bekannten Seitenkanalverdichters ist der, dass ein Rückschlussring und/oder der Permanentmagnet in die Nabe eingepresst wird, insbesondere mit Ihrem Innendurchmesser einen Pressverband mit der Nabe ausbilden, wodurch sich aufgrund der Spannungen eine Verformung der Nabe, insbesondere einer Lagerbohrung und/oder eines Lagersitzes, ergibt, so dass die Lagerbohrung und/oder der Lagersitz nachbearbeitet werden müssen, was die Kosten aufgrund des zusätzlichen Prozessschritts erhöht.

### Offenbarung der Erfindung

### Vorteile der Erfindung

Erfindungsgemäß wird eine Magnetrotoreinrichtung für einen Seitenkanalverdichter für ein Brennstoffzellensystem zur Förderung und/oder Verdichtung eines gasförmigen Mediums, insbesondere Wasserstoff, mit den Merkmalen der unabhängigen Patentansprüche bereitgestellt. Dabei befindet sich die Magnetrotoreinrichtung zumindest nahezu vollständig in einem Rotor-Raum und ist drehbar um eine Drehachse gelagert und/oder mittels eines Antriebs antreibbar. Dabei weist die Magnetrotoreinrichtung ein Verdichterrad, mittels dem insbesondere in einem Verdichterraum ein Gasstrom erzeugbar ist, eine Nabe, einen Rückschlussring und mindestens ein Lager auf.

Bezugnehmend auf Anspruch 1 weist die Nabe eine ringförmig um die Drehachse verlaufende und vom Rotor-Raum kapselbare Ausnehmung auf, wobei sich zumindest nahezu vollständig die Bauteile Rückschlussring und mindestens zwei Segmentmagnete, idealerweise vier Segmentmagnete in der Ausnehmung befinden. Dabei wird der Rückschlussring mittels mindestens eines Passstiftes und/oder einem Schraub-Element mit der Nabe verbunden.

Auf diese Weise lässt sich zum einen der Vorteil erzielen, dass eine kompakte und platzsparende Anordnung und Bauweise der Magnetrotoreinrichtung herbeigeführt werden kann, da sich die Bauteile Rückschlussring und Segmentmagnet in der Ausnehmung und somit in der Nabe integrieren lassen, wodurch die Magnetrotoreinrichtung in Richtung der Drehachse schmaler baut, im Vergleich zur Magnetrotoreinrichtung aus dem Stand der Technik.

Zudem lässt sich auf diese Weise der Vorteil erzielen, dass der Rückschlussring mittels mindestens eines Passstiftes und/oder eines Schraub-Elements mit der Nabe verbunden ist. Somit sind keine weiteren Bauteile zum Verbinden des Rückschlussrings mit der Nabe notwendig, wodurch sich die Bauteilkosten reduzieren lassen. Des Weiteren kann eine derart stabile Verbindung zwischen dem Rückschlussring und der Nabe mittels des Einsatzes mindestens eines Passstiftes und/oder eines Schraub-Elements hergestellt werden, dass die Bauteile Nabe und Rückschlussring derart formschlüssig und/oder stoffschlüssig und/oder kraftschlüssig über den Passstift und/oder das Schraub-Element miteinander verbunden sind, dass diese Verbindung über die gesamte Lebensdauer stabil bestehend bleibt und eine Auflösung der Verbindung zumindest nahezu ausgeschlossen werden kann. Somit lässt sich die Lebensdauer der Magnetrotoreinrichtung und/oder des Seitenkanalverdichters und/oder des Brennstoffzellensystems erhöhen.

Durch die in den Unteransprüchen aufgeführten Maßnahmen sind vorteilhafte Weiterbildungen der im Anspruch 1 angegebenen Magnetrotoreinrichtung und/oder des Seitenkanalverdichters möglich. Die Unteransprüche betreffen bevorzugte Weiterbildungen der Erfindung.

Gemäß einer vorteilhaften Weiterbildung der Magnetrotoreinrichtung weist der jeweilige Passstift und/oder das jeweilige Schraub-Element einen Kopf und einen Körper auf, wobei der Kopf einen größeren Durchmesser als der Körper aufweist.

Auf diese Weise kann eine kompakte Bauform der Verbindung des Rückschlussrings und der Nabe erzielt werden, insbesondere mittels des jeweilige Passstift und/oder das jeweilige Schraub-Element. Dabei kann der jeweilige Passstift und/oder das jeweilige Schraub-Element mit der Stirnfläche seines Kopfes, wobei die Stirnfläche zumindest nahezu orthogonal zur Drehachse verläuft, mit einem weiteren Element in Anlage kommen und somit eine Kraft, insbesondere eine Druckkraft, auf das weitere Element ausüben. Auf diese Weise kann eine Verbindung ausgebildet werden, die den jeweiligen Passstift und/oder das jeweilige Schraub-Element nicht auf Scherung beansprucht, sondern dass eine kraftschlüssige Verbindung über die Stirnfläche des Kopfes mit einem weiteren Element herstellbar ist. Somit lässt sich die Ausfallwahrscheinlichkeit des Passstifts und/oder des Schraub-Elements reduzieren, so dass sich die Lebensdauer der Magnetrotoreinrichtung und/oder des Seitenkanalverdichters erhöhen lässt.

Gemäß einer vorteilhaften Weiterbildung der Magnetrotoreinrichtung befindet sich der jeweilige Passstift und/oder das jeweilige Schraub-Element mit dem Kopf in einer ersten Aussparung des Rückschlussrings und mit dem Körper in einer zweiten Aussparung des Rückschlussrings und einer dritten Aussparung der Nabe befindet. Auf diese Weise kann der Vorteil erzielt werden, dass sich eine zuverlässige Verbindung des Rückschlussrings mit der Nabe herstellen lässt, ohne dass ein Lagersitz der Nabe und/oder des Verdichterrads beeinflusst wird. Die formschlüssige und/oder reibschlüssige Verbindung des Rückschlussrings und der Nabe mittels der jeweilige Passstift und/oder das jeweilige Schraub-Element weist dabei eine hohe Festigkeit auf, so dass die Bauteile Rückschlussring und Nabe über die gesamte Lebensdauer des Seitenkanalverdichters oder des Brennstoffzellensystems stabil miteinander verbunden bleiben. Zudem kann die derartige Verbindung der Bauteile mittels des jeweiligen Passstifts und/oder des jeweiligen Schraub-Elements sehr kompakt ausgeführt werden, wodurch sich die Baugröße des gesamten Seitenkanalverdichters reduzieren lässt. Dies wiederum kann den benötigten Einbauraum des Seitenkanalverdichters im Gesamtfahrzeug verringern.

Gemäß einer besonders vorteilhaften Ausgestaltung der Magnetrotoreinrichtung weist der Körper des jeweiligen Passstiftes einen größeren Durchmesser als die jeweilige dritte Aussparung auf, so dass sich eine kraftschlüssige und/oder reibschlüssige Verbindung, insbesondere ein Pressverband, zwischen dem jeweiligen Passstift und/oder der Nabe ausbildet. Auf diese Weise kann eine einfache und kostengünstige Verbindung von Nabe und Passstift erzielt werden, wobei die Lebensdauer dieser Verbindung über den gesamten Einsatzzeitraum des Seitenkanalverdichters gewährleistet werden kann, so dass sich die Ausfallwahrscheinlichkeit der Magnetrotoreinrichtung und/oder des Seitenkanalverdichters reduzieren lässt.

Gemäß einer vorteilhaften Ausbildung der Magnetrotoreinrichtung weist die dritte Aussparung in der Nabe ein Gewinde, insbesondere ein Innengewinde auf und das jeweilige Schraub-Element weist im Bereich des Körpers ein Gewinde, insbesondere ein Außengewinde, auf, wobei das Schraub-Element mit der Nabe verschraubt ist. Auf diese Weise kann das Schraub-Element mittels eines schnellen und kostengünstigen Verfahrensschrittes in die Nabe einschrauben, wobei sich eine kraftschlüssige Verbindung zwischen dem Kopf des Schraub-Elements und/oder dem Rückschlussring und/oder der Nabe erzielt wird, indem das Schraub-Element mit einem derart hohen EinschraubDrehmoment beaufschlagt wird, dass sich das Schraub Element in Richtung der Drehachse längt. Dies bewirkt eine zuverlässige Verbindung zwischen den Bauteilen Schraub-Element und/oder Rückschlussring und/oder Nabe über die gesamte Lebensdauer des Seitenkanalverdichters. Zudem ist die Verbindung zerstörungsfrei lösbar, falls während des Einsatzes der Magnetrotoreinrichtung und/oder des Seitenkanalverdichters Bauteile, wie beispielsweise der Rückschlussring, ausgetauscht werden müssen. Somit lassen sich die Wartungskosten reduzieren.

Gemäß einer vorteilhaften Weiterbildung der Magnetrotoreinrichtung verlaufen der jeweilige Passstiftes und/oder das jeweilige Schraub-Element zumindest annähernd parallel zur Drehachse verlaufen oder sind zumindest annähernd parallel zur Drehachse positioniert. Auf diese Weise kann der Vorteil erzielt werden, dass eine kostengünstige und schnelle Montage des jeweiligen Passstiftes und des jeweiligen Schraub-Elements erzielt werden kann. Zudem können die Bauteile Rückschlussring und/oder Nabe vor der Montage kostengünstig bearbeitet werden, so dass sich die Bohrung zur Aufnahme des Passstiftes und/oder des Schraubelements parallel zu einer Lagerbohrung ausrichten lassen, was eine vereinfachte und kostengünstige Bearbeitung auf den jeweiligen Fertigungsmaschinen der Nabe und/oder des Rückschlussrings herbeiführt. Somit lassen sich die Fertigungskosten und/oder Montagekosten reduzieren.

Gemäß einer besonders vorteilhaften Weiterbildung der Magnetrotoreinrichtung befindet sich der jeweilige Passstiftes und/oder das jeweilige Schraub-Element in einem abseitigen Bereich einer ersten Mittelachse einer Gewindebohrung und der Drehachse. Auf diese Weise kann die Verbindung zwischen dem Rückschlussrings und der Nabe möglichst weit weg von der Lagerbohrung angeordnet sein, so dass durch das Ausbilden der Verbindung zwischen Nabe und Rückschlussring keine Verformung und gegebenenfalls Nachbearbeitung der Lagerbohrung notwendig ist. Somit können die Kosten, insbesondere die Bearbeitungskosten, der Magnetrotoreinrichtung reduziert werden und/oder es kann die Ausfallwahrscheinlichkeit der Magnetrotoreinrichtung verringert werden aufgrund eines Lagerschadens ausgelöst durch eine Verformung der Lagerbohrung.

Da der bevorzugte Anwendungsbereich der erfindungsgemäßen Magnetrotoreinrichtung ein Seitenkanalverdichter und/oder ein Brennstoffzellensystem ist, wird ferner ein Seitenkanalverdichter und/oder ein Brennstoffzellensystem mit der erfindungsgemäßen Magnetrotoreinrichtung vorgeschlagen.

Gemäß einer vorteilhaften Ausbildung bei dem vorgeschlagenen Verfahren zum Herstellen der Magnetrotoreinrichtung für den Seitenkanalverdichter und/oder ein Brennstoffzellensystem wird der Rückschlussring bereitgestellt. Dieser Rückschlussring wird daraufhin in die Ausnehmung der Nabe eingebaut. Dabei ist der Rückschlussring mittels des mindestens eines Passstiftes und/oder einem Schraub-Element an der Nabe fixiert, insbesondere formschlüssig oder kraftschlüssig. Der Rückschlussring weist dabei mindestens zwei Vorsprünge aufweist, die insbesondere in Richtung der Drehachse verlaufen, zwischen denen jeweils ein Segmentmagnet montierbar ist. In einem weiteren Verfahrensschritt wird der jeweilige Segmentmagnet mit dem Rückschlussring, insbesondere einer Stirnfläche des Rückschlussrings, und/oder mit den jeweiligen Vorsprüngen verbunden. Diese Verbindung kann mittels eines formschlüssigen und/oder eines stoffschlüssigen und/oder eines kraftschlüssigen Verfahrens hergestellt werden, zum Ausbilden der Rotor-Baugruppe. In einem weiteren beispielhaften Verfahrensschritt kann ein Abschlussblech am Kragen und am Ansatz mittels eines stoffschlüssigen Verfahrens, insbesondere Laserschweißens, angebracht werden.

In einer besonders vorteilhaften Ausbildung des Verfahrens wird vorgeschlagen, bei welchem der mindestens eine Passstift mit seinem Körper derart in die dritte Aussparung eingepresst wird, dass sich eine kraftschlüssige und/oder reibschlüssige Verbindung zwischen dem jeweiligen Passstift und der Nabe ausbildet und somit der Rückschlussring und/oder die Rotorbaugruppe an der Nabe fixiert wird. Auf diese Weise kann eine kompakte Bauform und eine kostengünstige Montage der Rotorbaugruppe herbeigeführt werden, wobei sich die Ausfallwahrscheinlichkeit der Magnetrotoreinrichtung und/oder des Seitenkanalverdichters reduzieren lässt.

In einer vorteilhaften Weiterbildung des Verfahrens wird vorgeschlagen, dass das mindestens eine Schraub-Element in die dritte Aussparung der Nabe eingeschraubt wird, bis sich eine Längendehnung des Schraub-Elements ergibt, das mit seinem vergrößerten Kopf mit einer Stirnfläche des Rückschlussrings in Richtung der Drehachse in Anlage steht, so dass der Rückschlussring kraftschlüssig und/oder reibschlüssig und/oder formschlüssig an der Nabe fixiert wird.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

### Kurze Beschreibung der Zeichnung

Anhand der Zeichnung wird die Erfindung nachstehend eingehender beschrieben.

Es zeigt:
Figur 1 eine schematische Schnittansicht eines erfindungsgemäßen Seitenkanalverdichters,
Figur 2 eine schematische Schnittansicht einer Magnetrotoreinrichtung mit einem Verdichterrad, einer Nabe, einem Rückschlussring und mindestens einem Lager,
Figur 3 eine perspektivische Draufsicht einer erfindungsgemäßen Rotor-Baugruppe gemäß einer beispielhaften Ausführung mit dem Rückschlussring mit vier Vorsprüngen und vier jeweiligen Segmentmagneten,
Figur 4 eine perspektivische Schnittansicht des erfindungsgemäßen Rotor-Baugruppe mit einem Abschlussblech,
Figur 5 eine Schnittansicht der erfindungsgemäßen Rotor-Baugruppe gemäß dem Stand der Technik,
Figur 6 eine schematische Schnittansicht der Magnetrotoreinrichtung mit einem Passstift oder einem Schraub-Element, der Nabe und dem Rückschlussring.

### Beschreibung des Ausführungsbeispiels

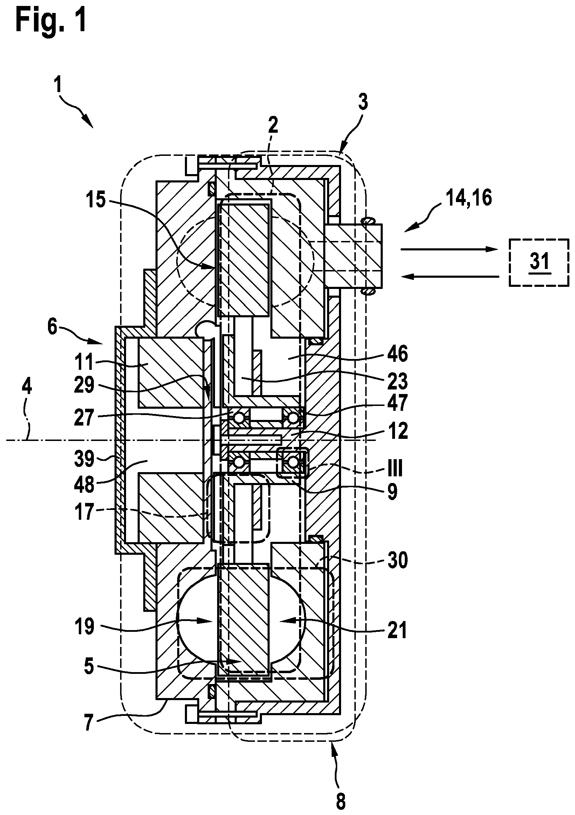

Der Darstellung gemäß **Fig.** 1 ist eine schematische Schnittansicht eines erfindungsgemäßen Seitenkanalverdichters 1 zu entnehmen.

Dabei ist in **Fig.** 1 gezeigt, dass der Seitenkanalverdichter 1 für ein Brennstoffzellensystem 31 zur Förderung und/oder Verdichtung eines gasförmigen Mediums, insbesondere Wasserstoff, mit einem Gehäuse 3 und einem Antrieb 6 versehen ist, wobei das Gehäuse 3 ein Gehäuse-Oberteil 7 und ein Gehäuse-Unterteil 8 aufweist. Zudem weist das Gehäuse 3 einen umlaufend um eine Drehachse 4 verlaufenden Verdichterraum 30 auf, der mindestens einen umlaufenden Seitenkanal 19, 21 aufweist, mit einer in dem Gehäuse 3 befindlichen Magnetrotoreinrichtung 2, die drehbar um die Drehachse 4 angeordnet ist und durch den Antrieb 6 angetrieben wird, wobei die Magnetrotoreinrichtung 2 an ihrem Umfang im Bereich des Verdichterraums 30 angeordnete Schaufelblätter 5 aufweist und mit jeweils einer am Gehäuse 3 ausgebildeten Gas-Einlassöffnung 14 und einer Gas-Auslassöffnung 16, die über den Verdichterraum 30, insbesondere den mindestens einen Seitenkanal 19, 21, fluidisch miteinander verbunden sind, wobei der Seitenkanalverdichter 1 mindestens ein Lager 27, 47 aufweist. Der mindestens eine Seitenkanal 19, 21 kann dabei zumindest in einem Teilbereich des Gehäuses 3 umlaufend um die Drehachse 4 verlaufen, wobei in dem Teilbereich, in dem der mindestens eine Seitenkanal 19, 21 im Gehäuse 3 nicht ausgebildet ist, ein Unterbrecher-Bereich 15 im Gehäuse 3 ausgebildet ist.

Zudem ist in **Fig.** 1 gezeigt, dass der Antrieb 6 als ein Axialfeld-Elektromotor 6 ausgeführt ist, der einen Stator 11 und einer Rotor-Baugruppe 17 aufweist, wobei der Stator 11 und die Rotor-Baugruppe 17 scheibenförmig umlaufend um die Drehachse 4 ausgebildet sind und wobei der Stator 11 in Richtung der Drehachse 4 neben der Rotor-Baugruppe 17 angeordnet ist. Dabei kann sich die Rotor-Baugruppe 17 zumindest mittelbar an oder in einer Nabenscheibe 23 der Magnetrotoreinrichtung 2 befinden. Zudem ist in **Fig. 1** gezeigt, dass der Seitenkanalverdichter 1 einen Stator-Raum 48 und einem Rotor-Raum 46 aufweist, wobei in diesen Räumen 46, 48 zumindest teilweise Bauteile des Antriebs 6 angeordnet sind. Dabei weist das Gehäuse-Oberteil 7 eine durchgehende Wandung 29 auf, die sich zwischen dem Stator-Raum 48 und dem Rotor-Raum 46 befindet und eine fluidische Trennung dieser bewirkt. Der Stator-Raum 48 ist zudem von einem Statorgehäuse 39 zumindest teilweise umgeben und/oder gekapselt. Dabei weist das Gehäuse-Unterteil 8 einen zylindrischen Lagerzapfen 12 auf, wobei der Lagerzapfen 12 derart in Richtung der Drehachse 4 verläuft, dass seine Mantelfläche umlaufend um die Drehachse 4 verläuft und wobei ein erstes Lager 27 und/oder ein zweites Lager 47 radial zur Drehachse 4 mit der Mantelfläche des Lagerzapfens 12 in Kontakt stehen. Dabei kann der Antrieb 6 als ein Axialfeld-Elektromotor 6 ausgeführt sein, der den Stator 11 und die Rotor-Baugruppe 17 aufweist, wobei der Stator 11 in Richtung der Drehachse 4 neben der Rotor-Baugruppe 17 angeordnet ist. Zudem weist der Seitenkanalverdichter 1 den zylindrischen Lagerzapfen 12 auf, wobei der Lagerzapfen 12 derart in Richtung der Drehachse 4 verläuft, dass seine Mantelfläche umlaufend um die Drehachse 4 verläuft. Dabei stehen das erste Lager 27 und/oder das zweite Lager 47 radial zur Drehachse 4 mit der Mantelfläche des Lagerzapfens 12 in Kontakt.

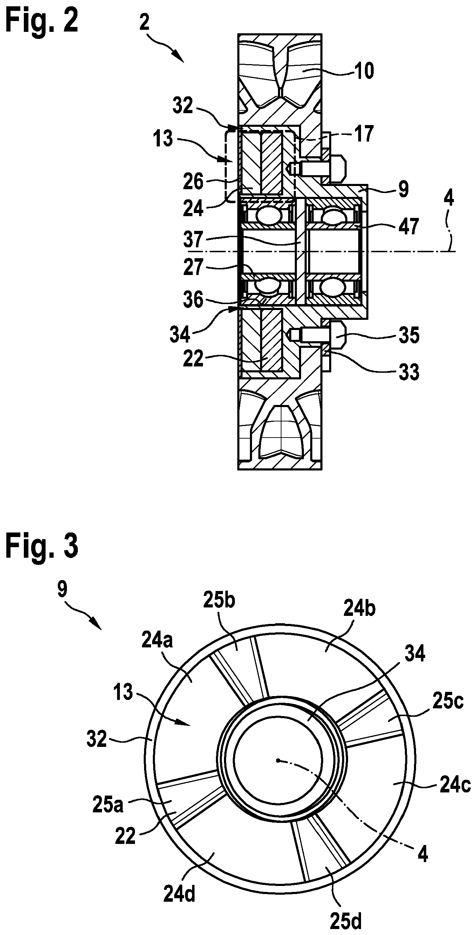

**Fig.** 2 zeigt eine schematische Schnittansicht der Magnetrotoreinrichtung 2 mit einem Verdichterrad 10, einer Nabe 9, einem Rückschlussring 22 und mindestens einem Lager 27, 47 gezeigt. Die gezeigte Magnetrotoreinrichtung 2 ist dabei ein Bauteil des Seitenkanalverdichter 1 für das Brennstoffzellensystem 31 zur Förderung und/oder Verdichtung eines gasförmigen Mediums, insbesondere Wasserstoff. Dabei kann sich die Magnetrotoreinrichtung 2 zumindest nahezu vollständig in dem Rotor-Raum 46 befinden und drehbar um die Drehachse 4 gelagert und mittels des Antriebs 6 antreibbar sein. Dabei weist die Magnetrotoreinrichtung 2 das Verdichterrad 10 auf, mittels dem insbesondere in dem Verdichterraum 30 ein Gasstrom erzeugbar ist. Des Weiteren weist die Magnetrotoreinrichtung 2 die Nabe 9, den Rückschlussring 22 und mindestens ein Lager 27, 47 auf.

Weiterhin ist **Fig.** 2 gezeigt, dass die Nabe 9 eine ringförmig um die Drehachse 4 verlaufende und vom Rotor-Raum 46 kapselbare Ausnehmung 13 aufweist, wobei sich zumindest nahezu vollständig die Bauteile Rückschlussring 22 und mindestens zwei Segmentmagnete 24, idealerweise vier Segmentmagnete 24, in der Ausnehmung 13 befinden. In weiteren beispielhaften Ausführungsformen können sich aber auch sechs Segmentmagnete 24 oder mehr in der Ausnehmung 13 befinden. Zwischen dem ersten Lager 27 und dem zweiten Lager 47 kann sich in Richtung der Drehachse 4 eine Distanzscheibe 37 befinden, wobei sich ein Abstand der Lager zueinander, insbesondere in Richtung der Drehachse 4 mittels der Distanzscheibe 37 einstellen lässt.

Wie in **Fig.** 2 gezeigt, ist die Rotor-Baugruppe 17 mittels mindestens einer Federscheibe 33 und mindestens einer Schraube 35 mit dem Verdichterrad 10 verbunden. Die Aussparung 13 verläuft orthogonal scheibenförmig zur Drehachse 4 und wird auf ihrer der Drehachse 4 abgewandten Seite durch den umlaufenden zylindrischen Kragen 32 der Nabe und auf ihrer der Drehachse 4 zugewandten Seite über einen umlaufenden zylindrischen Ansatz 34 der Nabe 9 begrenzt. Dabei bildet die Nabe 9 an ihrem der Drehachse 4 abgewandten Außendurchmesser den zylindrischen Kragen 32 aus und auf Ihrem der Drehachse 4 zugewandten Innendurchmesser den zylindrischen Ansatz 34 aus. Innerhalb des Innendurchmessers und/oder des zylindrischen Ansatzes 34 befindet sich zudem eine Lagerbohrung 36 mit einem Lagersitz 45.

**Fig.** 2 zeigt, dass die Ausnehmung 13 auf Ihrer dem Stator 11 zugewandten Seite, insbesondere in Richtung der Drehachse 4, geöffnet ist. In einer beispielhaften Ausführungsform des Seitenkanalverdichters 1 ist die Ausnehmung 13 zum Stator 11 hin geöffnet, wobei die Ausnehmung 13 mittels eines Abschlussblechs 26 verschlossen und/oder gekapselt werden kann. Das Abschlussblech 26 ist dabei an einer dem Stator 11 zugewandten Stirnfläche der Nabe 9 angebracht, wobei das Abschlussblech 26 unmagnetisch ist und mittels mindestens einer Laserschweißung 38 an der Nabe 9 angebracht werden kann. Dabei bilden die Nabe 9 und/oder der Rückschlussring 22 und/oder die Segmentmagnete 24 und/oder die Federscheibe 33 und/oder die Schraube 35 die Rotor-Baugruppe 17 aus.

Die in **Fig.** 2 dargestellte Magnetrotoreinrichtung 2 kann eine Vielzahl an Materialien aufweisen. In einer beispielhaften Ausführungsform der Magnetrotoreinrichtung 2 kann die Nabe 9 einen austenitischer Edelstahl aufweisen, insbesondere X2CrNiMo17-12-2 (1.4404), der Rückschlussring 22 kann einen unlegierten Baustahl aufweisen, insbesondere S235JR und/oder St37 und/oder St52, und/oder einen magnetischen Automatenstahl, insbesondere 11SMn30. Die Segmentmagnete 24 können beispielsweise NdFeB aufweisen und das Abschlussblech 26 kann austenitischer Edelstahl aufweisen, insbesondere X2CrNiMo17-12-2 (1.4404). Zudem wird das Verdichterrad 10, welches Aluminium und/oder Kunststoff aufweisen kann, und einen gestuften Verlauf aufweist, in Richtung der Drehachse 4 auf die Nabe 9 aufgeschoben, bevor die Bauteile Nabe 9 und Verdichterrad 10 mit den Absätzen Ihres gestuften Verlaufs in Anlage kommen und dann mittels der mindestens einen Federscheibe 33 und der mindestens einen Schraube 35 verschraubt werden.

Nach diesem Montageschritt kann in einer beispielhaften Ausführungsform die Magnetrotoreinrichtung 2 gewuchtet werden, um die Fliehkräfte während des Betriebes klein zu halten. Hier wird Material an definierten Bereichen des Verdichterrads 10 und/oder der Nabe 9 weggenommen. Nach dem Wuchten werden schließlich die Lager 27, 47 und die Distanzscheibe 37 über den Außendurchmesser eingepresst. In einer alternativen Ausführungsform kann das Wuchten auch als abschließender Fertigungsschritt erfolgen.

**Fig.** 3 zeigt eine perspektivische Draufsicht der erfindungsgemäßen Nabe 9 gemäß einer beispielhaften Ausführung mit dem Rückschlussring 22 mit vier Vorsprüngen 25 und vier jeweiligen Segmentmagneten 24. Dabei ist gezeigt, dass die Nabe 9 an ihrem der Drehachse 4 zugewandten Innendurchmesser den um die Drehachse 4 umlaufenden Ansatz 34 aufweist und dass die Nabe 9 an ihrem der Drehachse 4 abgewandten Außendurchmesser den um die Drehachse 4 umlaufenden Kragen 34 aufweist. In die Ausnehmung 13 der Nabe 9 wird der Rückschlussring 22 eingelegt und/oder eingepresst, wobei der Rückschlussring 22 schon als vormontierte Rotor-Baugruppe 17, aufweisen den Rückschlussring 22 und die Segmentmagnete 24, in der Nabe 9 montiert wird. Dabei kann der Rückschlussring 22 in einer beispielhaften Ausführungsform der Magnetrotoreinrichtung 2 einen, insbesondere in Richtung der Drehachse 4 verlaufenden, ersten Vorsprung 25a, zweiten Vorsprung 25b, dritten Vorsprung 25c und vierten Vorsprung 25d aufweisen. In alternativen Ausführungsformen kann der Rückschlussring 22 mindestens zwei Vorsprünge 25 oder mehrere Vorsprünge 25 aufweisen. Dabei befinden sich jeweils im Zwischenraum zwischen zwei Vorsprüngen 25 jeweils ein Segmentmagnet 24 umlaufend um die Drehachse 4. In dieser beispielhaften Ausführungsform der Magnetrotoreinrichtung 2 weist diese einen ersten Segmentmagneten 24a, einen zweiten Segmentmagneten 24b, einen dritten Segmentmagneten 24c und einen vierten Segmentmagneten 24d auf.

Dabei sind jeweils zwei gegenüberliegende Segmentmagnete 24 als Nordpol und zwei gegenüberliegende Segmentmagnete 24 als Südpol ausgebildet, so dass sich auf einer Kreisförmigen Laufbahn immer jeweils ein Segmentmagnet 24 als Nordpol und Südpol auf einer umlaufend um die Drehachse 4 verlaufenden Kreisbahn abwechseln. Diese als Kreissegmente ausgebildete Segmentmagnete 24 können eine gerade Anzahl magnetisierbarer Segmentmagnete 24 darstellen, welche auf eine Seite der Nabe 9 aufgesetzt sind. Zwischen den Kreissegmenten 24 sind die Vorsprünge 25 vorhanden, welche die Segmentmagneten 24 voneinander lateral (im radialen Umlauf) separieren können. In der Magnetrotoreinrichtung 2 müssen die Segmentmagnete 24 befestigt werden, um das Drehmoment des Antriebs 6 sowie eine optionale axiale Magnetkraft, zu übertragen. Diese Funktion wird durch den mit der Nabe 9 fest verbundenen Rückschlussring 22 übernommen.

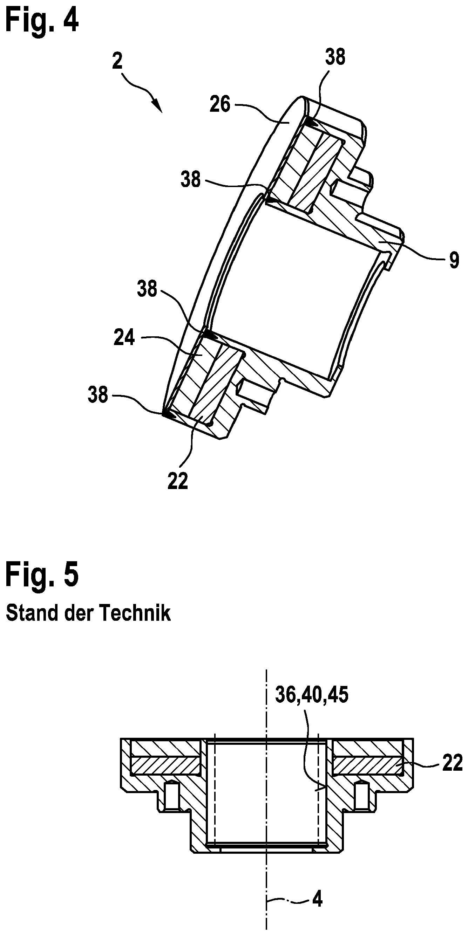

**Fig.** 4 zeigt eine perspektivische Schnittansicht der erfindungsgemäßen Rotor-Baugruppe 17 inklusive Abschlussblech 26. Dabei ist gezeigt, dass das Abschlussblech 26 in dieser beispielhaften Ausführungsform der Magnetrotoreinrichtung 2 derart am Kragen 32 und am Ansatz 34 mittels eines stoffschlüssigen Verfahrens, insbesondere Laserschweißens, angebracht wird, dass eine Kapselung der Ausnehmung 13, insbesondere eine gasdichte Kapselung erfolgt. Somit ist die zum Stator 11 hin geöffnete Ausnehmung 13 mittels des Abschlussblechs 26 verschlossen und/oder gekapselt. Dabei kann eine jeweilige Laserschweißnaht 38 im Kragen 32 und/oder im Ansatz 34 entweder aus mehreren um die Drehachse 4 umlaufenden punktuellen Laserschweißnaht 38 bestehen, die Stiftförmig sich verjüngend von dem Abschlussblech 26 in die Nabe 9 verlaufen. Es kann sich aber auch um eine ringförmig um die Drehachse 4 durchgängig umlaufenden jeweilige Schweißnaht im Kragen 32 und/oder im Ansatz 34 handeln.

**Fig.** 5 zeigt eine schematische Schnittansicht der erfindungsgemäßen Rotor-Baugruppe 17 gemäß dem Stand der Technik. Dabei wird der Rückschlussring 22 in den Bereich der Fläche 40 in die Nabe 9 eingepresst. Durch diese Pressung verformt sich die Lagerbohrung 36. Die anschließende Montage der jeweiligen Lager 27, 47, bei denen es sich insbesondere um Kugellager 27, 47 handelt, kann aufgrund der Verformung im Bereich der Fläche nur sehr schwer möglich sein und kann die Lager 27, 47 vorschädigen, so dass die Ausfallwahrscheinlichkeit der Lager 27, 47 und somit des gesamten Seitenkanalverdichters 1 erhöht wird.

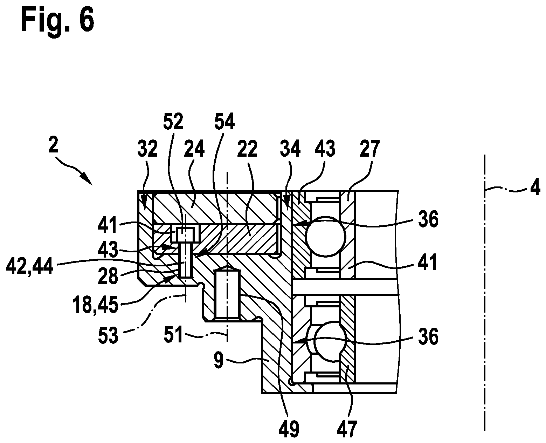

In **Fig.** 6 ist eine schematische Schnittansicht der Rotoreinrichtung 2 gemäß einem ersten Ausführungsbeispiel gezeigt. Dabei ist gezeigt, dass der Rückschlussring 22 mittels mindestens eines Passstiftes 42 und/oder einer Schraub-Elements 44 mit der Nabe 9 verbunden ist. Der Passstift 42 und/oder das Schraub-Element 44 können sich dabei zwischen dem Außendurchmesser des Rückschlussrings 22 und einer ersten Mittelachse 51 einer Gewindebohrung 49 in der Nabe 9 befinden. Weiterhin ist gezeigt, dass die Nabe 9 den Lagersitz 45 in Form der Lagerbohrung 36 an ihrem Innendurchmesser aufweist, wobei sich das erste Lager 27 und/oder das zweite Lager 47 in diesem Bereich befindet. Dabei weist das jeweilige Lager 27, 47 einen Lageraußenring 43 und einen Lagerinnenring 41 auf, wobei das jeweilige Lager 27, 47 mit dem Außendurchmesser des Lageraußenrings 43 in die Lagerbohrung 36 der Nabe 9 eingepresst ist.

Des Weiteren zeigt **Fig.** 6, dass der jeweilige Passstift 42 und/oder das jeweilige Schraub-Element 44 einen Körper 54 aufweist. Optional kann der jeweilige Passstift 42 und/oder das jeweilige Schraub-Element 44 einen Kopf 52 aufweisen, wobei der Kopf 52 einen größeren Durchmesser als der Körper 54 aufweisen kann. Dabei befindet sich der jeweilige Passstift 42 und/oder das jeweilige Schraub-Element 44, insbesondere nach erfolgter Montage, mit dem Kopf 52 in einer ersten Aussparung 41 des Rückschlussrings 22 und mit dem Körper 54 in einer zweiten Aussparung 43 des Rückschlussrings 22 und einer dritten Aussparung 45 der Nabe 9. In einer beispielhaften Ausführung der Magnetrotoreinrichtung 2 kann der Körper 54 des jeweiligen Passstiftes 42 einen größeren Durchmesser als die jeweilige dritte Aussparung 45 aufweisen, so dass sich eine kraftschlüssige und/oder reibschlüssige Verbindung, insbesondere ein Pressverband, zwischen dem jeweiligen Passstift 42 und/oder der Nabe 9 ausbildet.

Zudem ist in **Fig.** 6 gezeigt, dass sich der jeweilige Passstiftes 42 und/oder das jeweilige Schraub-Element 44 in einem abseitigen Bereich einer ersten Mittelachse 51 einer Gewindebohrung 49 und der Drehachse 4 befindet. Dabei verläuft der jeweilige Passstift 42 und/oder das jeweilige Schraub-Element 44 zumindest annähernd parallel zur Drehachse 4 verlaufen oder positioniert sind. Dabei verläuft der jeweilige Passstiftes 42 und/oder das jeweilige Schraub-Element 44 rotationssymmetrisch um eine zweite Mittelachse 53 verläuft. Dabei kann die zweite Mittelachse 53 zumindest nahezu parallel zur Drehachse 4 und/oder zur ersten Mittelachse 51 verlaufen. Dabei weist die dritte Aussparung 45 in der Nabe 9 ein Gewinde 18, insbesondere ein Innengewinde 18 auf und das jeweilige Schraub-Element 44 weist im Bereich des Körpers 54 ein Gewinde 28, insbesondere ein Außengewinde 28, auf, wobei das Schraub-Element 44 mit der Nabe 9 verschraubt ist.

Wie in **Fig.** 6 dargestellt kann eine Befestigung des Rückschlussringes 22 mittels des jeweiligen Passstiftes 42 und/oder des jeweiligen Schraub-Elements 44 hergestellt werden, ohne dass die Lagerbohrung 36 und/oder der Lagersitz 45 der Nabe 9 verformt wird. Die Lagerbohrung 36 dient als Lagersitz 45 und hat deshalb sehr enge Toleranzanforderungen. Dabei ist die Nabe 9 aus einem weichen, nicht magnetischen, schweißbaren, austenitischen Edelstahl. Dies und die sehr geringe Wandstärke im Bereich des umlaufenden zylindrischen Ansatzes 34 ist der Grund, dass sich die Lagerbohrung 36 bei dem einpressten Rückschlussrings 22, der eine hohe Steifigkeit aufweist, im in **Fig.** 5 gezeigten Stand der Technik verformen kann. Somit wird mittels der erfindungsgemäßen Ausgestaltung der Magnetrotoreinrichtung 2 mit dem jeweiligen Passstift 42 und/oder des jeweiligen Schraub-Elements 44 eine Verformung der Lagerbohrung 36 und/oder des Lagersitzes 45 verhindert werden, die beim Einpressen des jeweiligen Lagers 27, 47 zu einem stark reduzierten Lagerspiel führen, was sich über den Temperaturgang (im speziellen bei tiefen Temperaturen) negativ auf die Lagerlebensdauer auswirken würde. Dabei befindet sich der jeweilige Passstift 42 und/oder das jeweiligen Schraub-Elements 44 möglichst weit entfernt vom Lagersitz 45, so dass zumindest nahezu keine Verformung des Lagersizes 45 durch das Einbringen des Passstiftes 42 und/oder des Schraub-Elements 44 erwartbar ist. Somit muss aufgrund der erfindungsgemäßen Ausgestaltung der Magnetrotoreinrichtung 2 nach der Montage der Rotor-Baugruppe 17, nicht mehr die Lagerbohrung 36 aufwendig nachgeschliffen werden. Aufgabe ist es eine Verbindung auszulegen, welche die Lagerbohrung 36 nach der Montage nicht verformt und ein nachträgliches Ausschleifen der Lagerbohrung 36 nicht notwendig macht, was die Einzelteile wieder günstiger macht. Als Vorteile ergeben sich eine Erhöhung der Lebensdauer der Lager 27, 47, einfachere und kostenreduzierte Herstellbarkeit der Magnetrotoreinrichtung 2, da aufwendige Schleifprozesse entfallen.

Wie in **Fig.** 6 gezeigt kann dabei zudem ein Herstellprozesses und/oder ein Verfahren zum Herstellen der Magnetrotoreinrichtung 2 für den Seitenkanalverdichter 1 und/oder das Brennstoffzellensystem 31 angewendet werden. Der Herstellprozess oder das Verfahren kann können folgende Schritte zum Ausbilden der Magnetrotoreinrichtung 2 erfolgen::
- Bereitstellen eines Rückschlussring 22, wobei der Rückschlussring 22 mindestens zwei Vorsprünge 25 aufweist, zwischen denen jeweils ein Segmentmagnet 24 anbringbar ist,
- Einbau des Rückschlussrings 22 oder Einschieben in Richtung der Drehachse 4 in die Aussparung 13 der Nabe 9, wobei der Rückschlussring 22 mittels mindestens eines Passstiftes 42 und/oder einem Schraub-Element 44 an der Nabe 9 fixiert wird, insbesondere formschlüssig oder kraftschlüssig,
- Verbinden des jeweiligen Segmentmagneten 24 mit dem Rückschlussring 22, insbesondere mit einer Stirnfläche des Rückschlussrings 22 und/oder mit den jeweiligen Vorsprüngen 25, mittels eines formschlüssigen, stoffschlüssigen oder kraftschlüssigen Verfahrens, zum Ausbilden einer Rotor-Baugruppe 17,

Ferner kann bei dem Verfahren der mindestens eine Passstift 42 mit seinem Körper 54 derart in die dritte Aussparung 45 eingepresst werden, dass sich eine kraftschlüssige und/oder reibschlüssige Verbindung zwischen dem jeweiligen Passstift 42 und der Nabe 9 ausbildet. Dabei wird der Rückschlussring 22 und/oder die Rotorbaugruppe 17 an der Nabe 9 fixiert. Des Weiteren wird ein Verfahren beansprucht, bei welchem das mindestens eine Schraub-Element 44 in die dritte Aussparung 45 der Nabe 9 eingeschraubt wird, bis sich eine Längendehnung des Schraub-Elements 44 ergibt. Dabei steht das Schraub-Element 44 das mit seinem vergrößerten Kopf 52 mit einer Stirnfläche des Rückschlussrings 22 in Richtung der Drehachse in Anlage steht, so dass der Rückschlussring 22 kraftschlüssig und/oder reibschlüssig und/oder formschlüssig an der Nabe 9 fixiert wird.

## Patentansprüche

1. Magnetrotoreinrichtung (2) für einen Seitenkanalverdichter (1) für ein Brennstoffzellensystem (31) zur Förderung und/oder Verdichtung eines gasförmigen Mediums, insbesondere Wasserstoff, wobei die Magnetrotoreinrichtung (2) drehbar um eine Drehachse (4) gelagert und/oder mittels eines Antriebs (6) antreibbar ist, wobei die Magnetrotoreinrichtung (2) ein Verdichterrad (10), mittels dem insbesondere in einem Verdichterraum (30) ein Gasstrom erzeugbar ist, eine Nabe (9), einen Rückschlussring (22) und mindestens ein Lager (27, 47) aufweist, wobei die Nabe (9) eine ringförmig um die Drehachse (4) verlaufende und von einem Rotor-Raum (46) kapselbare Ausnehmung (13) aufweist, wobei sich zumindest nahezu vollständig die Bauteile Rückschlussring (22) und mindestens zwei Segmentmagnete (24), idealerweise vier Segmentmagnete (24), in der Ausnehmung (13) befinden, **dadurch gekennzeichnet, dass** der Rückschlussring (22) mittels mindestens eines Passstiftes (42) und/oder einer Schraub-Elements (44) mit der Nabe (9) verbunden ist.

2. Magnetrotoreinrichtung (2) gemäß Anspruch 1, **dadurch gekennzeichnet, dass** der jeweilige Passstift (42) und/oder das jeweilige Schraub-Element (44) einen Körper (54) aufweist. Dabei weist der der jeweilige Pasststift (42) und/oder das jeweilige Schraub-Element (44) optional einen Kopf (52) auf, wobei der Kopf (52) einen größeren Durchmesser als der Körper (54) aufweist.

3. Magnetrotoreinrichtung (2) gemäß Anspruch 2, **dadurch gekennzeichnet, dass** sich der jeweilige Passstift (42) und/oder das jeweilige Schraub-Element (44) mit dem Kopf (52) in einer ersten Aussparung (41) des Rückschlussrings (22) befindet und mit dem Körper (54) in einer zweiten Aussparung (43) des Rückschlussrings (22) und einer dritten Aussparung (45) der Nabe (9) befindet.

4. Magnetrotoreinrichtung (2) gemäß Anspruch 3, **dadurch gekennzeichnet, dass** der Körper (54) des jeweiligen Passstiftes (42) einen größeren Durchmesser als die jeweilige dritte Aussparung (45) aufweist, so dass sich eine kraftschlüssige und/oder reibschlüssige Verbindung, insbesondere ein Pressverband, zwischen dem jeweiligen Passstift (42) und/oder der Nabe (9) ausbildet.

5. Magnetrotoreinrichtung (2) gemäß Anspruch 3, **dadurch gekennzeichnet, dass** die dritte Aussparung (45) in der Nabe (9) ein Gewinde (18), insbesondere ein Innengewinde (18) aufweist und das jeweilige Schraub-Element (44) im Bereich des Körpers (54) ein Gewinde (28), insbesondere ein Außengewinde (28), aufweist, wobei das Schraub-Element (44) mit der Nabe (9) verschraubt ist.

6. Magnetrotoreinrichtung (2) gemäß einem der vorrangegangenen Ansprüche, **dadurch gekennzeichnet, dass** der jeweilige Passstiftes (42) und/oder das jeweilige Schraub-Element (44) zumindest annähernd parallel zur Drehachse (4) verlaufen oder positioniert sind.

7. Magnetrotoreinrichtung (2) gemäß einem der Ansprüche 1 bis 3, **dadurch gekennzeichnet, dass** sich der jeweilige Passstiftes (42) und/oder das jeweilige Schraub-Element (44) in einem abseitigen Bereich einer ersten Mittelachse (51) einer Gewindebohrung (49) und der Drehachse (4) befindet.

8. Seitenkanalverdichter (1) mit einem Stator (11) und einer Magnetrotoreinrichtung (2) nach einem der Ansprüche 1 bis 7.

9. Brennstoffzellensystem (31) mit einem Seitenkanalverdichter (1) nach Anspruch 8, wobei der Seitenkanalverdichter (1) in einem Anodenkreis des Brennstoffzellensystems (31) angeordnet ist.

10. Verfahren zum Herstellen der Magnetrotoreinrichtung (2) für einen Seitenkanalverdichter (1) und/oder ein Brennstoffzellensystem (31) gemäß einem der vorrangegangenen Ansprüche, mit den folgenden Schritten:
- Bereitstellen eines Rückschlussring (22), wobei der Rückschlussring (22) mindestens zwei Vorsprünge (25) aufweist, zwischen denen jeweils ein Segmentmagnet (24)anbringbar ist,
- Einbau des Rückschlussrings 22 oder Einschieben in Richtung der Drehachse (4) in die Aussparung (13) der Nabe (9), wobei der Rückschlussring (22) mittels mindestens eines Passstiftes (42) und/oder einem Schraub-Element (44) an der Nabe (9) fixiert wird, insbesondere formschlüssig oder kraftschlüssig,
- Verbinden des jeweiligen Segmentmagneten (24) mit dem Rückschlussring (22), insbesondere mit einer Stirnfläche des Rückschlussrings (22) und/oder mit den jeweiligen Vorsprüngen (25), mittels eines formschlüssigen, stoffschlüssigen oder kraftschlüssigen Verfahrens, zum Ausbilden einer Rotor-Baugruppe (17),

11. Verfahren nach Anspruch 10, bei welchem der mindestens eine Passstift (42) mit seinem Körper (54) derart in die dritte Aussparung (45) eingepresst wird, dass sich eine kraftschlüssige und/oder reibschlüssige Verbindung zwischen dem jeweiligen Passstift (42) und der Nabe (9) ausbildet und somit der Rückschlussring (22) und/oder die Rotorbaugruppe (17) an der Nabe (9) fixiert wird.

12. Verfahren nach Anspruch 10, bei welchem das mindestens eine Schraub-Element (44) in die dritte Aussparung (45) der Nabe (9) eingeschraubt wird, bis sich eine Längendehnung des Schraub-Elements (44) ergibt, das mit seinem vergrößerten Kopf (52) mit einer Stirnfläche des Rückschlussrings (22) in Richtung der Drehachse in Anlage steht, so dass der Rückschlussring (22) kraftschlüssig und/oder reibschlüssig und/oder formschlüssig an der Nabe (9) fixiert wird.

## Claims

1. Magnetic rotor device (2) for a side channel compressor (1) for a fuel cell system (31) for conveying and/or compressing a gaseous medium, in particular hydrogen, wherein the magnetic rotor device (2) is rotatably mounted about a rotational axis (4) and/or can be driven by means of a drive (6), wherein the magnetic rotor device (2) has a compressor wheel (10), by means of which, in particular, a gas flow can be generated in a compressor chamber (30), a hub (9), a ground ring (22) and at least one bearing (27, 47), wherein the hub (9) has a recess (13) running annularly around the rotational axis (4) and which can be encapsulated by a rotor chamber (46), wherein at least almost completely the components comprising the ground ring (22) and at least two segment magnets (24), ideally four segment magnets (24), are located in the recess (13), **characterized in that** the ground ring (22) is connected to the hub (9) by means of at least one locating pin (42) and/or a screw element (44).

2. Magnetic rotor device (2) according to Claim 1, **characterized in that** the respective locating pin (42) and/or the respective screw element (44) have/has a body (54), here, the respective locating pin (42) and/or the respective screw element (44) optionally have/has a head (52), wherein the head (52) has a larger diameter than the body (54).

3. Magnetic rotor device (2) according to Claim 2, **characterized in that** the respective locating pin (42) and/or the respective screw element (44) are/is located with the head (52) in a first cut-out (41) of the ground ring (22) and are/is located with the body (54) in a second cut-out (43) of the ground ring (22) and a third cut-out (45) of the hub (9).

4. Magnetic rotor device (2) according to Claim 3, **characterized in that** the body (54) of the respective locating pin (42) has a larger diameter than the respective third cut-out (45), such that a non-positive and/or frictional connection, in particular a press-fit connection, are/is formed between the respective locating pin (42) and/or the hub (9).

5. Magnetic rotor device (2) according to Claim 3, **characterized in that** the third cut-out (45) in the hub (9) has a thread (18), in particular an internal thread (18), and the respective screw element (44) has, in the region of the body (54), a thread (28), in particular an external thread (28), wherein the screw element (44) is screwed to the hub (9).

6. Magnetic rotor device (2) according to any one of the preceding claims, **characterized in that** the respective locating pin (42) and/or the respective screw element (44) run or are positioned at least approximately parallel to the rotational axis (4).

7. Magnetic rotor device (2) according to any one of Claims 1 to 3, **characterized in that** the respective locating pin (42) and/or the respective screw element (44) are/is located in a remote region of a first central axis (51) of a threaded hole (49) and the rotational axis (4).

8. Side channel compressor (1) with a stator (11) and a magnetic rotor device (2) according to any one of Claims 1 to 7.

9. Fuel cell system (31) having a side channel compressor (1) according to Claim 8, wherein the side channel compressor (1) is arranged in an anode circuit of the fuel cell system (31).

10. Method for producing the magnetic rotor device (2) for a side channel compressor (1) and/or a fuel cell system (31) according to any one of the preceding claims, with the following steps:
- providing a ground ring (22), wherein the ground ring (22) has at least two projections (25), between which a segment magnet (24) can be attached in each case,
- installing the ground ring 22 or inserting it in the direction of the rotational axis (4) into the cut-out (13) of the hub (9), wherein the ground ring (22) is fixed to the hub (9) by means of at least one locating pin (42) and/or a screw element (44), in particular in a positively locking or non-positive manner,
- connecting the respective segment magnet (24) to the ground ring (22), in particular with a front surface of the ground ring (22) and/or with the respective projections (25), by means of a positively locking, integrally joined or non-positive method, for forming a rotor assembly (17).

11. Method according to Claim 10, in which the at least one locating pin (42) is pressed with its body (54) into the third cut-out (45) in such a way that a non-positive and/or frictional connection is formed between the respective locating pin (42) and the hub (9), and thus the ground ring (22) and/or the rotor assembly (17) are/is fixed to the hub (9).

12. Method according to Claim 10, wherein the at least one screw element (44) is screwed into the third cut-out (45) of the hub (9), until a longitudinal expansion of the screw element (44) results, which screw element is in contact by way of its enlarged head (52) with a front surface of the ground ring (22) in the direction of the rotational axis, such that the ground ring (22) is fixed to the hub (9) in a non-positive and/or frictional and/or positively locking manner.

## Revendications

1. Dispositif de rotor magnétique (2) pour un compresseur à canal latéral (1) pour un système de pile à combustible (31) destiné au transport et/ou à la compression d'un fluide gazeux, en particulier de l'hydrogène, le dispositif de rotor magnétique (2) étant monté de manière rotative autour d'un axe de rotation (4) et/ou pouvant être entraîné de manière rotative au moyen d'un mécanisme d'entraînement (6), le dispositif de rotor magnétique (2) possédant une roue de compresseur (10), au moyen de laquelle un flux de gaz peut être généré, notamment dans une chambre de compression (30), un moyeu (9), un anneau de confinement (22) et au moins un palier (27, 47), le moyeu (9) présentant un évidement (13) de forme annulaire qui suit un tracé autour de l'axe de rotation (4) et pouvant être encapsulé par un espace de rotor (46), les composants anneau de confinement (22) et au moins deux aimants segmentés (24), idéalement quatre aimants segmentés (24), se trouvant au moins presque entièrement dans l'évidement (13), **caractérisé en ce que** l'anneau de confinement (22) est relié au moyeu (9) au moyen d'au moins une goupille de serrage (42) et/ou d'un élément à vis (44).

2. Dispositif de rotor magnétique (2) selon la revendication 1, **caractérisé en ce que** la goupille de serrage (42) respective et/ou l'élément de vis (44) respectif possèdent un corps (54). La goupille de serrage (42) respective et/ou l'élément à vis (44) respectif possèdent ici facultativement une tête (52), la tête (52) ayant un diamètre supérieur à celui du corps (54).

3. Dispositif de rotor magnétique (2) selon la revendication 2, **caractérisé en ce que** la goupille de serrage (42) respective et/ou l'élément à vis (44) respectif se trouvent avec la tête (52) dans un premier évidement (41) de l'anneau de confinement (22) et se trouvent avec le corps (54) dans un deuxième évidement (43) de l'anneau de confinement (22) et un troisième évidement (45) du moyeu (9).

4. Dispositif de rotor magnétique (2) selon la revendication 3, **caractérisé en ce que** le corps (54) de la goupille de serrage (42) respective présente un diamètre plus grand que le troisième évidement (45) respectif, de sorte qu'une liaison par force et/ou par friction, en particulier un ajustement serré, se forme entre la goupille de serrage (42) respective et/ou le moyeu (9).

5. Dispositif de rotor magnétique (2) selon la revendication 3, **caractérisé en ce que** le troisième évidement (45) dans le moyeu (9) possède un filetage (18), en particulier un filetage femelle (18), et l'élément à vis (44) respectif dans la zone du corps (54) possède un filetage (28), en particulier un filetage mâle (28), l'élément à vis (44) étant vissé au moyeu (9).

6. Dispositif de rotor magnétique (2) selon l'une des revendications précédentes, **caractérisé en ce que** la goupille de serrage (42) respective et/ou l'élément à vis (44) respectif suivent un tracé ou sont positionnés de manière au moins approximativement parallèle à l'axe de rotation (4).

7. Dispositif de rotor magnétique (2) selon l'une des revendications 1 à 3, **caractérisé en ce que** la goupille de serrage (42) respective et/ou l'élément à vis (44) respectif se trouvent dans une zone à l'écart d'un premier axe central (51) d'un alésage fileté (49) et de l'axe de rotation (4).

8. Compresseur à canal latéral (1) comprenant un stator (11) et un dispositif de rotor magnétique (2) selon l'une des revendications 1 à 7.

9. Système de pile à combustible (31) comprenant un compresseur à canal latéral (1) selon la revendication 8, le compresseur à canal latéral (1) étant disposé dans un circuit d'anode du système de pile à combustible (31).

10. Procédé de fabrication du dispositif de rotor magnétique (2) pour un compresseur à canal latéral (1) et/ou un système de pile à combustible (31) selon l'une des revendications précédentes, comprenant les étapes suivantes :
- fourniture d'un anneau de confinement (22), l'anneau de confinement (22) possédant au moins deux saillies (25) entre lesquelles peut être monté respectivement un aimant segmenté (24),
- montage de l'anneau de confinement (22) ou insertion en direction de l'axe de rotation (4) dans l'évidement (13) du moyeu (9), l'anneau de confinement (22) étant fixé au niveau du moyeu (9) au moyen d'au moins une goupille de serrage (42) et/ou d'un élément à vis (44), notamment par complémentarité de formes ou par force,
- connexion de l'aimant segmenté (24) respectif à l'anneau de confinement (22), en particulier à une surface frontale de l'anneau de confinement (22) et/ou aux saillies (25) respectives, au moyen d'un procédé par complémentarité de formes, par liaison de matières ou par liaison par force, en vue de former un sous-ensemble rotor (17).

11. Procédé selon la revendication 10, avec lequel au moins une goupille de serrage (42) est enfoncée avec son corps (54) dans le troisième évidement (45) de telle sorte qu'une liaison par force et/ou par friction est formée entre la goupille de serrage (42) respective et le moyeu (9) et que l'anneau de confinement (22) et/ou le sous-ensemble rotor (17) soient ainsi fixés au niveau du moyeu (9).

12. Procédé selon la revendication 10, avec lequel l'au moins un élément à vis (44) est vissé dans le troisième évidement (45) du moyeu (9) jusqu'à ce qu'il se produise un allongement longitudinal de l'élément à vis (44), lequel est en appui par sa tête agrandie (52) avec une surface frontale de l'anneau de confinement (22) en direction de l'axe de rotation, de sorte que l'anneau de confinement (22) soit fixé par liaison par force et/ou par friction et/ou par complémentarité de formes au niveau du moyeu (9).
